Europäisches Patentamt

European Patent Office

Office européen des brevets

(19)

(11) Veröffentlichungsnummer: **0 141 082**
**A2**

(12) **EUROPÄISCHE PATENTANMELDUNG**

(21) Anmeldenummer: **84109501.1**

(22) Anmeldetag: **09.08.84**

(51) Int. Cl.⁴: **B 01 D 39/08**

(30) Priorität: **11.08.83 DE 3329117**

(43) Veröffentlichungstag der Anmeldung:
**15.05.85 Patentblatt 85/20**

(84) Benannte Vertragsstaaten:
**CH FR GB IT LI SE**

(71) Anmelder: **Züricher Beuteltuchfabrik AG**

**CH-8803 Rüschlikon(CH)**

(72) Erfinder: **Müller, Hans-Rudolf**
**Ostbühlstrasse 49**
**CH-8038 Zürich(CH)**

(74) Vertreter: **Weber, Otto Ernst, Dipl.-Phys.**
**Hofbrunnstrasse 36**
**D-8000 München 71(DE)**

(54) **Filtertuch für Scheibenfilter.**

(57) Die Erfindung betrifft ein Filtertuch für Scheibenfilter mit insbesondere sektorförmigen Filterzellen aus einem Filtertuch. In dieses Filtertuch sind direkt Versteifungen in der Form von U-förmigen Klammern eingearbeitet und dort in Säumen oder Hohlsäumen oder Schlaufen festgelegt.

FIG. 1

EP 0 141 082 A2

## Filtertuch für Scheibenfilter

0141082

Die Erfindung betrifft ein Filtertuch für ein Scheibenfilter mit insbesondere sektorförmigen und Versteifungen aufweisenden Filterzellen.

Bei Scheibenfiltern muß bekanntlich der während des Filtervorganges auf dem Filtertuch aufgewchsene Filterkuchen am Ende eines Filterzyklus abgehoben werden, was gewöhnlich mittels Druckluft geschieht, die in den Innenraum der Filterzelle eingeblasen wird. Der bei deisem Einblasen auf das Filtertuch einwirkende Druckluftstoß sollte an sich eine möglichst steil verlaufende Flanke des Druckluftanstiegprofils haben, damit sich der Filterkuchen vollständig vom Filtertuch lösen kann. Eine zu starke Ausbauchung des Filtertuches ist dabei aber nicht erwünscht, weil eine zu große Luftmenge in die Zelle geblasen werden muß. Dies bedeutet einen hohen Luftverbrauch und damit einen unerwünschten Energieverbrauch. Außerdem wird die Blaszeit zu lange, so daß keine höheren Drehzahlen gefahren werden können. Die Überschneidungszeit reicht nicht aus, um den Innenraum des Beutels mit Luft zu füllen. Ein weiterer Nachteil besteht darin, daß die großen Ausbauchungen auch große Spannungen im Filtertuch hervorrufen, durch welche dessen Lebensdauer vermindert wird.

Ein weiterer Nachteil des stark ausgebauchten Filtertuchs besteht darin, daß die Luft nicht rasch genug entweichen kann und das Filtertuch somit im aufgeblasenen Zustand den Schaber passiert und dort entlang streift.

Ein derartiges Scheibenfilter weist also zwei Lochplatten auf, auf denen das Filtertuch mittels Klemmleisten eingespannt ist. Diese Klemmleisten können dabei radial und/oder kreisbogenförmig und/oder sternförmig oder auch tellerförmig verlaufen. Wesentlich ist aber, daß bei diesem bestehenden Scheibenfilter zum Festlegen des Filtertuches zusätzlich zu den Lochplatten noch Klemmleisten benötigt werden, um so zu starke Ausbauchungen des Filtertuches auszuschließen. Eine Umrüstung bestehender Filteranlagen ist nicht unproblematisch, da Lochplatten und Klemmleisten entsprechend angepaßt werden müssen, damit die unerwünschten starken Ausbauchungen sicher ausgeschlossen sind.

Es ist daher Aufgabe der Erfindung, ein Filtertuch zu
schaffen, bei dem auf einfache Weise starke Ausbauchungen
während der Drucklufteinwirkung zum Abheben des Filterkuchens ausgeschlossen sind.

Diese Aufgabe wird erfindungsgemäß dadurch gelöst, daß die
Versteifungen direkt in das Gewebe des Filtertuches einbezogen sind.

Bei der Erfindung ist also kein Zusammenwirken von Klemmleisten und Lochplatten erforderlich, um die gewünschten
Versteifungen für das Filtertuch zu bewirken. Vielmehr
sind diese Versteifungen direkt in das Filtertuch einbezogen, so daß es beim Umrüsten einer bestehenden Filteranlage ausreichend ist, wenn das Filtertuch allein mit
seinen Versteifungen an diese Anlage angepaßt wird.

In einer vorteilhaften Weiterbildung der Erfindung ist vorgesehen, daß die Versteifungen aus Metall oder Kunststoff
oder anderem steifen Material bestehende U-förmige Klammern
sind, deren Schenkel- oder Endabstand der Scheibenfilter-
Segmentdicke angepaßt ist. Die Klammern können dabei ein
Flachprofil oder ein Rundprofil haben.

Diese Klammern werden mit ihren Schenkeln beispielsweise
in einem durch die Nahtstelle von zwei Filtertaschenhälften gebildeten Saum oder in einem durch Aufnähen eines
bandförmigen Gewebestückes auf das Gewebe des Filtertuches erhaltenen Hohlsaum oder in auf dem Gewebe des
Filtertuches angebrachten Schlaufen festgelegt, wodurch
es auf einfache Weise möglich ist, die die Versteifungen
bildenden Klammern in das Gewebe des Filtertuches einzubeziehen: es genügt, wenn die freien Enden oder Schenkel
der Klammern in die Säume bzw. Hohlsäume bzw. Laschen eingeschoben werden, wodurch gleichzeitig die Scheibenfilter-
Segmentdicke festgelegt wird.

Zusätzlich können die Enden der Schenkel der Klammern
noch durch Laschen fixiert werden, wodurch eine besonders sichere Verbindung zwischen Gewebe und Klammern
erreicht wird. Auch ist es möglich, die Enden der Schenkel der Klammern noch durch eine weitere, an der Außenseite auf das Gewebe des Filtertuches angebrachte Klammer oder Bride zu fixieren.

Die Versteifungen können radial und/oder kreisbogenförmig verlaufen. Wichtig ist lediglich, daß die Versteifungen derart geführt sind, daß übermäßige Ausbauchungen des
Filtertuches während der Drucklufteinwirkung vermieden
sind.

Die Versteifungen können außerdem fest in das Gewebe eingearbeitet sein, d.h., die Versteifungen in Form von Flachprofilen oder Rundprofilen können fest beispielsweise in
Hohlsäume des Gewebes eingenäht sein.

Schließlich ist es auch möglich, daß eine Filterzelle
mehrere Versteifungen aufweist, was insbesondere dann
gilt, wenn diese Filterzelle eine relativ große Oberfläche besitzt, so daß größere Ausbauchungen zu befürchten sind.

Das Material für die Versteifungen bzw. Klammern wird abhängig von dem beabsichtigten Einsatz des Scheibenfilters
gewählt. Sollten mit dem Scheibenfilter besonders aggresive
Materialien behandelt werden, so bestehen die Versteifungen
in zweckmäßiger Weise aus Edelstahl oder aus einem geeigneten Kunststoff.

Das erfindungsgemäße Filtertuch kann auch zusammen mit einer
Lochplatte verwendet werden, auf deren Oberfläche es aufgelegt wird. Dies wird insbesondere dann der Fall sein, wenn
das Scheibenfilter einen relativ großen Durchmesser besitzt.
Für kleinere Durchmesser ist aber eine derartige Lochplatte
nicht erforderlich.

Wenn die Lochplatte konkav ausgebildet ist, damit das mit
Druckluft zu füllende Volumen möglichst klein gehalten ist,
dann sollten die Versteifungen ebenfalls entsprechend der
Lochplatte konkav geformt sein, damit das Filtertuch an die
konkave Oberfläche der Lochplatte angepaßt ist.

Die Erfindung ermöglicht ein Filtertuch für ein Scheibenfilter, bei dem die Versteifungen direkt in das Gewebe des Filtertuches einbezogen sind, so daß keine besonderen Maßnahmen
vorgesehen werden müssen, die in einem Zusammenwirken von
Klemmleisten und einer Lochplatte lediglich zum Festlegen
des Filtertuches bestehen.

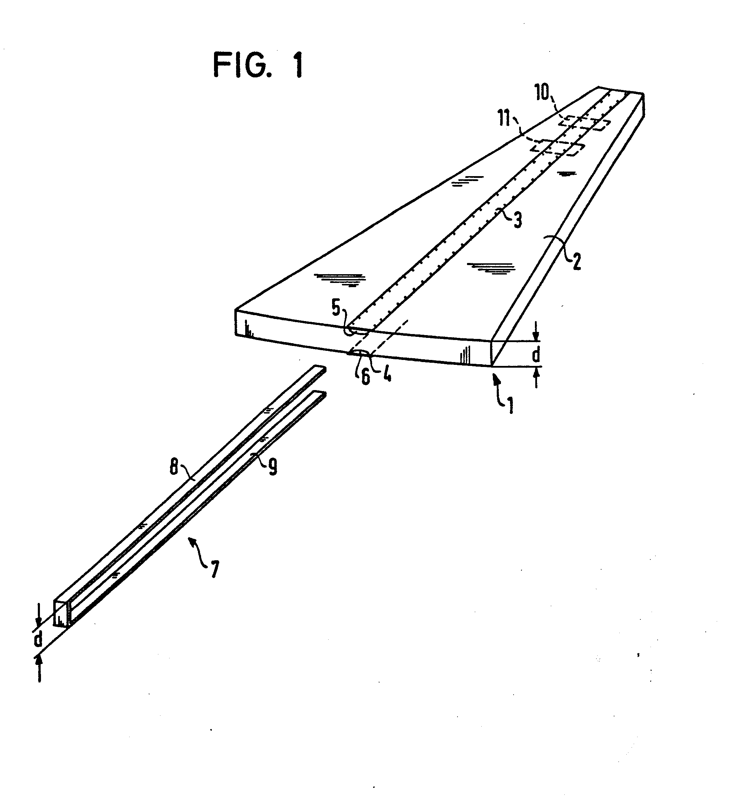

Nachfolgend wird die Erfindung anhand der Zeichnung näher
erläutert, in deren Figuren 1 bis 5 jeweils eine sektorförmige Filterzelle des Filtertuches gezeigt ist.

In Fig. 1 ist eine sektorförmige Filterzelle 1 gezeigt,
die aus einem Filtertuch 2 besteht, das zwei Filtertaschenhälften bildet. Durch Aufnähen von bandförmigen Gewebestücken 3,4 entstehen zwei Hohlsäume 5,6, in die eine
Klammer 7 aus Metall oder Kunststoff oder einem anderen
steifen Material mit einem Flachprofil eingeschoben werden kann. Diese Klammer 7 hat eine U-förmige Gestalt und
weist Schenkel 8,9 auf, die jeweils in den Hohlsäumen 5,6
festgelegt werden. Der Abstand d zwischen den Schenkeln 8,9
der Klammer 7 ist genau an die Scheibenfilter-Segmentdicke d
angepaßt. Wenn also die Schenkel 8,9 der Klammer 7 in die
Hohlsäume 5,6 der Filterzelle 1 eingeschoben sind, dann
wird diese Filterzelle 1 durch die Klammer 7 in ihrer Segmentdicke versteift.

Zusätzlich können am Kopfende der Filterzelle 1 noch beispielsweise zwei Laschen 10,11 vorgesehen sein, durch die
die Enden der Schenkel 8,9 der Klammer 7 besonders sicher
fixiert werden.

Die Laschen 10 und 11 werden auf dem aus Kunststoff oder Metall oder einem anderen entsprechenden Material hergestellten Filtersegment angebracht, so daß die Schenkelenden der Klammern einen zusätzlichen Halt bekommen. Es ist auch möglich, eine zusätzliche Klammer oder Bride an der Außenseite auf dem Gewebe derart anzubringen, daß die Enden der Schenkel 8, 9 der Klammer 7 besonders gut fixiert sind.

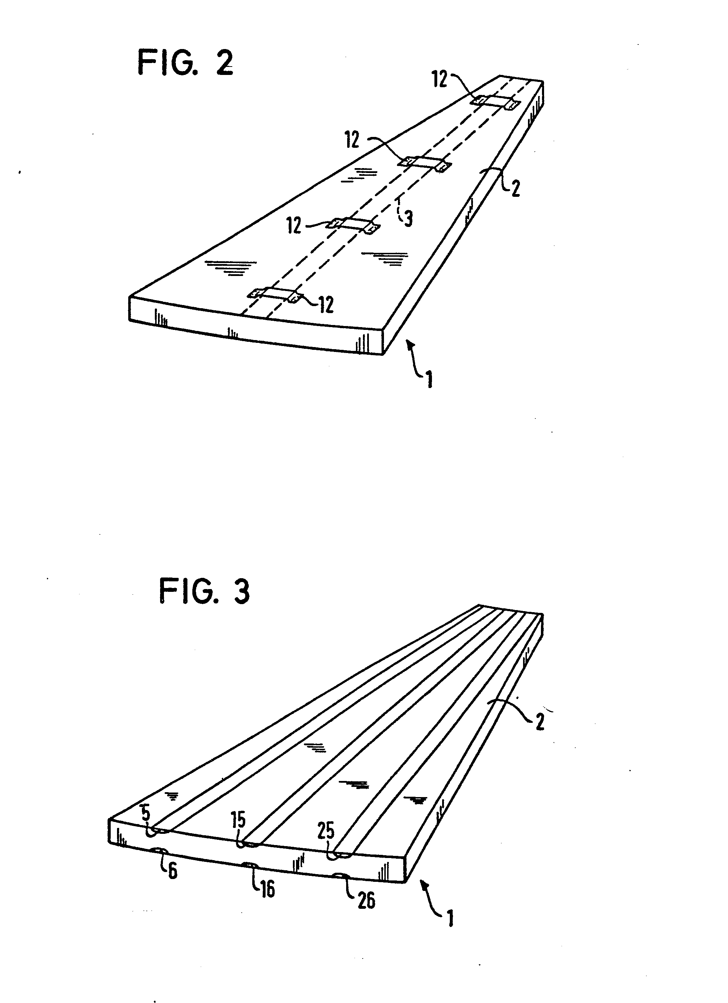

Fig. 2 zeigt ein weiteres Ausführungsbeispiel der Erfindung, bei dem der Schenkel 3 der Klammer 7 durch Schlaufen 12 festgelegt wird, die auf die Oberfläche des Filtertuches 2 aufgenäht sind. Selbstverständlich ist es auch möglich, diese Schlaufen 12 auf der Innenseite des Filtertuches 2 vorzusehen.

In Fig. 3 ist eine Filterzelle 1 mit besonders großer Filtersegmentfläche dargestellt. Um die gewünschte Versteifung zu erzielen, ist diese Filtersegmentfläche durch mehrere Hohlsäume 5, 6, 15, 16 und 25, 26 unterteilt. Anstelle dieser Hohlsäume können selbstverständlich auch Schlaufen entsprechend dem Ausführungsbeispiel der Fig. 2 vorgesehen werden.

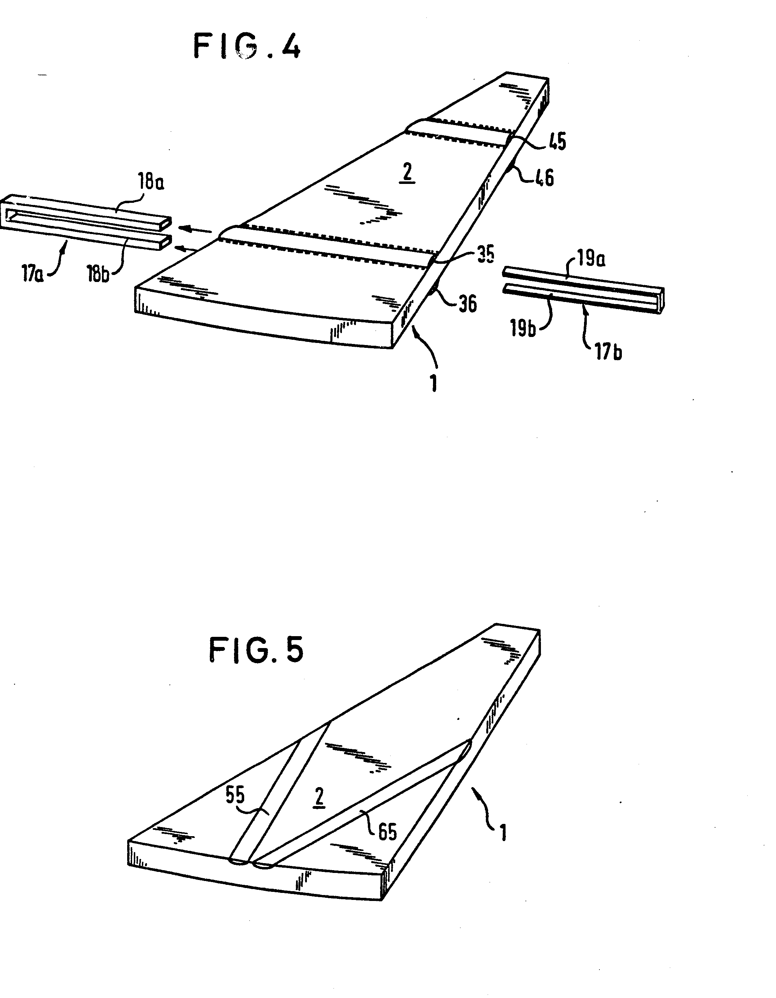

In Fig. 4 ist ein Ausführungsbeispiel der Erfindung dargestellt, bei dem Hohlsäume 35, 36 und 45, 46 zur Aufnahme von Versteifungen kreisbogenförmig und nicht radial wie in den übrigen Ausführungsbeispielen verlaufen. Gegebenenfalls können solche kreisbogenförmige Versteifungen zusätzlich zu radialen Versteifungen vorgesehen werden. In die Hohlsäume 35 und 36 werden von der einen Seite die U-Schenkel 18a und 18b der U-förmigen Gabel 17a und von der anderen Seite die U-Schenkel 19a und 19b der U-förmigen Gabel 17b eingeschoben. Dabei gelangen die freien Enden der beiden U-Schenkel 19a und 19b an den durch Pfeile markierten Stellen in die stirnseitigen Öffnungen der U-Schenkel 18a und 18b, welche als Hohlprofile ausgebildet sind. Bei hinreichender Steifigkeit der Klammern erübrigt sich bei dieser Ausführungsform jegliche zusätzliche Halterung, da die beiden Klammern sich gegenseitig fixieren.

In der Fig. 5 ist ein weiteres Ausführungsbeispiel der Erfindung dargestellt, bei welchem Hohlsäume 55 und 65 praktisch von einem gemeinsamen Punkt am Umfang der Filterzelle 1 aus V-förmig zur Scheibenmitte hin verlaufen. Diese Ausführungsform ist besonders für sehr breite Filterzellen vorteilhaft. Es wird nämlich eine besonders große Fläche der Filterzelle durch die in der Fig 5 dargestellte Ausführungsform des Erfindungsgenenstandes derart unterteilt, daß keine große Ausbauchung mehr auftreten kann.

**0141082**

## Patentansprüche

1. Filtertuch für Scheibenfilter mit insbesondere sektorförmigen und Versteifungen aufweisenden Filterzellen, dadurch
   g e k e n n z e i c h n e t , daß die Versteifungen direkt
   in das Gewebe des Filtertuches (2) einbezogen sind.

2. Filtertuch nach Anspruch 1, dadurch g e k e n n z e i c h
   n e t , daß die Versteifungen aus Metall oder Kunststoff
   oder einem anderen steifen Material bestehende U-förmige
   Klammern (7) sind, deren Schenkelabstand (d) der Scheibenfilter-Segmentdicke (d) angepaßt ist.

3. Filtertuch nach Anspruch 2, dadurch g e k e n n
   z e i c h n e t , daß die Klammern (7) ein Flachprofil
   oder ein Rundprofil haben.

4. Filtertuch nach Anspruch 2 oder 3, dadurch g e k e n n
   z e i c h n e t , daß die Schenkel (8,9) der Klammern (7)
   in einem durch die Nahtstelle von zwei Filtertaschenhälften gebildeten Saum festgelegt sind.

5. Filtertuch nach Anspruch 2 oder 3, dadurch g e k e n n
   z e i c h n e t, daß die Schenkel (8,9) der Klammern (7)
   jeweils in einem durch Aufnähen eines bandförmigen Gewebestückes (3,4) auf das Gewebe des Filtertuches (2) erhaltenen Hohlsaum (5,6) festgelegt sind.

6. Filtertuch nach Anspruch 2 oder 3, dadurch g e k e n n
   z e i c h n e t , daß die Schenkel (8,9) der Klammern (7)
   in auf dem Gewebe des Filtertuches (2) angebrachten Schlaufen (12) festgelegt sind.

7. Filtertuch nach einem der Ansprüche 4 bis 6, dadurch g e
   k e n n z e i c h n e t , daß die Enden der Schenkel (8,9)
   der Klammern (7) zusätzlich durch Laschen (10,11) fixiert
   sind , welche auf dem aus Kunststoff oder Metall bestehenden Filterzellen-Segment angebracht sind.

8. Filtertuch nach einem der Ansprüche 4 bis 6, dadurch
   g e k e n n z e i c h n e t , daß die Enden der Schenkel (8,9) der Klammern (7) zusätzlich durch eine weitere,
   an der Außenseite auf das Gewebe des Filtertuches (2)
   angebrachte Klammer oder Bride fixiert sind.

9. Filtertuch nach einem der Ansprüche 1 bis 3, dadurch
   g e k e n n z e i c h n e t , daß die Versteifungen
   fest in das Gewebe eingearbeitet sind.

10. Filtertuch nach einem der Ansprüche 1 bis 9, dadurch
    g e k e n n z e i c h n e t , daß die Versteifungen
    radial und/oder kreisbogenförmig verlaufen (vgl. Fig.4).

11. Filtertuch nach einem der Ansprüche 1 bis 10, dadurch
    g e k e n n z e i c h n e t , daß eine Filterzelle (1)
    mehrere Versteifungen aufweist (vgl. Fig. 3).

12. Filtertuch nach einem der Ansprüche 2 bis 11, dadurch
    g e k e n n z e i c h n e t , daß die U-förmigen Klammern
    als teleskopartig ineinander schiebbare Gabeln (17a,17b)
    ausgebildet sind, welche die Filterzelle (1) von deren
    Rändern her übergreifen und deren freie U-Schenkel (18a,
    18b, bzw. 19a, 19b) sich in einem ineinander geschobenen
    Bereich überlappen).

13. Filtertuch nach Anspruch 12, dadurch g e k e n n z e i c h-
    n e t , daß die U-förmigen Klammern in Umfangsrichtung
    angeordnet sind.

14. Filtertuch nach einem der Ansprüche 1 bis 12, dadurch
    g e k e n n z e i c h n e t , daß wenigstens zwei Ver-
    steifungen von einem gemeinsamen Punkt am äußeren Umfangsrand der Filterzelle aus V-förmig zur Scheibenmitte
    hin verlaufen.

FIG. 1

FIG. 2

FIG. 3

# FIG.4

18a

17a  18b

45

2

46

35

36

1

19a

19b  17b

# FIG.5

55

2

65

1